# EUROPEAN PATENT APPLICATION

(11) **EP 4 517 083 A1**
(43) Date of publication of application: **05.03.2025**
(21) Application number: 23382887.0
(22) Date of filing: 31.08.2023
(51) Int. Cl.: F03D 1/06

(54) **BLADE FOR A WIND TURBINE, WIND TURBINE AND METHOD FOR MANUFACTURING**

(71) Applicant: Siemens Gamesa Renewable Energy Innovation & Technology S.L., 31621 Sarriguren (Navarra) (ES)
(72) Inventor: The designation of the inventor has not yet been filed
(74) Representative: SGRE-Association

(57) **Abstract**

A blade (3) for a wind turbine (1), comprising:
a first and a second blade segment (7, 8) connected to each other using connecting elements (13); and
a fairing (18) having an airfoil-shaped cross-section (19) and an opening (39, 40) for accessing the connecting elements (13).

The fairing, by way of the opening, gives easy access to the connecting elements. This access can be used by operators during assembly and/or maintenance of the blade.

## Description

The present invention relates to a blade, to a wind turbine and to a method for manufacturing a blade.

New wind turbines require blade designs with longer span and chord so as to increase the annual engine production. However, larger blades face logistic barriers, both in transportation and manufacturing.

Segmented blades, also known as split blades or modular blades, come as a solution. Therein, blade segments are connected to each other using connecting elements.

US 2011/0293432 A1, US 2014/0334934 A1, US 2022/0228554 A1 disclose examples of known connecting elements. It is worth mentioning that, from an aerodynamic and aero-acoustic standpoint, it is desirable to have the least number of blade segments. Fewer blade segments are also preferred to reduce the complexity of the design and the margin of error.

In the region where the connecting elements join two adjacent blade segments, a gap or opening between the two blade segments may be present. This gap may have a width in the longitudinal direction of the blade between, for example, 100-400 mm and larger. The gap, including portions of the connecting elements such as bolts, bushings etc., needs to be covered. A suitable cover must provide an aerodynamic shape during the operation of the blade as well as protection against sand, rain, hail, and other weather conditions.

In this regard, EP 4 083 414 A1 discloses a fairing divided into at least two separate fairing sections configured to cover the gap including portions of connecting elements arranged inside the gap. In particular, Figs. 22-24 of said document disclose a first fairing portion 172 being arranged on a blade segment 132 before the blade segment 132 is connected to a blade segment 134. A gap 130 is formed between the connected blade segments 132 and 134 and the first fairing portion 172 is moved in a longitudinal direction of the blade to cover the gap 130. Then, a second fairing portion 170 is provided to cover the remainder of the gap 130. The first and second fairing portions 170, 172 are connected to each other and to the blade segments 132, 134.

It is one object of the present invention to provide an improved blade for a wind turbine as well as a corresponding method for manufacturing said blade.

According to a first aspect, a blade for a wind turbine is provided. The blade comprises:
- a first and a second blade segment connected to each other using connecting elements; and
- a fairing having an airfoil-shaped cross-section and an opening for accessing the connecting elements.

The fairing, by way of the opening, gives easy access to the connecting elements. This access can be used by operators during assembly and/or maintenance of the blade. Also, other components such as electrical components may be accessible through the opening. Examples of such electrical components are elements of a lightening protections system, sensors, electric cables etc.

For example, the first and second blade segments are connected to each other using the connecting elements in the longitudinal direction of the blade. For example, the first blade segment is an inboard blade segment, and the second blade segment is an outboard blade segment. The inboard blade segment may comprise a root of the blade. The outboard blade segment may comprise a tip of the blade.

The connecting elements may comprise bolts, studs, bushings, threads, nuts, studs, and other means to connect the first and second blade segment to each other. In particular, the connecting elements are made, partially or fully, of metal, particularly steel.

The opening in the fairing may be of a rectangular, oval, or circular shape, for example.

The airfoil-shaped cross-section of the fairing may comprise a leading edge, a trailing edge, a pressure side and/or a suction side. The airfoil-shaped cross-section may be made of a thin-walled material having a thickness of, for example, smaller than 10 mm, 5 mm, or 3 mm. The opening is preferably formed as a through-hole through the thin-walled material.

Preferably, a gap (preferably, an air gap) is formed between the first and second blade segment. At least portions of the connecting elements may be present in the gap. In particular, one or more connecting elements may be connected to the first blade segment at one end thereof and connected to the second blade segment at another end thereof. Thus, a portion of the respective connecting elements extends through the gap. One or more of the connecting elements may, partially or fully, extend parallel to a longitudinal axis of the blade. In one example, the longitudinal axis is a pitch access of the blade. The connecting elements may be accessible through the opening in a direction radial with respect to said longitudinal axis.

According to an embodiment, the opening is arranged on the suction or pressure side of the airfoil-shaped cross-section.

In this way, by comparison, a large area is available for the opening, giving easy access to the connecting elements.

For example, the fairing may comprise two openings for accessing the connecting elements. One opening may be arranged on the pressure side, and the other opening may be arranged on the suction side. This, advantageously, gives access to the connecting elements from both sides, making assembly and/or maintenance even easier.

According to a further embodiment, the airfoil-shaped cross-section has a closed shape along its perimeter.

This perimeter may include the trailing edge, the leading edge, the pressure side and/or the suction side. In other words, the airfoil-shaped cross-section extends, preferably, completely around a longitudinal axis of the blade. In this way, the gap between the first and second blade segment may be covered completely by a single fairing.

According to an embodiment, the fairing or airfoil-shaped cross-section is formed as a single integral component.

Thereby, parts that need to be assembled in the manufacturing process are reduced. For example, the single integral component may be manufactured by molding, such as molding in a lamination process or in an injection molding process.

According to an embodiment, the blade further comprises a hatch, wherein the opening is closed by the hatch, the hatch being preferably fastened to the fairing or a frame, wherein, preferably, a sealing element is arranged between the hatch and the fairing or frame.

When there are two or more openings, each opening may be closed by a hatch as herein described. Thus, one hatch may be arranged on the pressure side and one hatch may be arranged on the suction side.

A "hatch" herein is to be understood as an element which closes the opening, but may be removed if need be. The hatch may be attached to the fairing or frame by mechanical and/or chemical means. For example, an adhesive, rails, grooves, screws and/or bolts may be used for connecting the hatch to the fairing or frame. More generally, receiving and engaging elements may be used to attach the hatch to the opening. Preferably, removal of the hatch does not require to destroy or damage the hatch, fairing or frame. In one example, the hatch may be fastened to one or more of the connecting elements.

The hatch may have a rectangular shape with a long edge oriented in the crosswise direction of the blade, for example. The hatch may have a curved shape. The hatch may be made partially or fully of a thin-walled material, having, preferably, a thickness smaller than 10 mm, 5 mm, or 3 mm. The hatch may have a shape which is convex with respect to a central longitudinal axis of the blade.

"Frame" herein refers to a reinforced element extending fully or partially around the opening. The frame may be formed integrally with the material of the fairing, or may be provided as a separate component attached to the fairing, for example, by adhesive, screws, rivets, or other joining technology.

In one example, the hatch and the fairing provide one continuous surface. To this end, the fairing and hatch may be finished with putty and paint. For example, putty is filled into one or more gaps between the hatch and the fairing or frame. Once hardened, and possibly sanded, the resulting surface is painted. This may result in a surface with improved aerodynamic properties.

The fairing and/or hatch may be provided with serrations, vortex generators, T-spoilers or other aerodynamically enhancing devices or features.

The sealing element may comprise, for example, an adhesive or a gasket, in particular made of rubber. The sealing element may be configured to prevent or reduce ingress of sand, water, or other contaminants into the gap and/or to the connecting element.

According to an embodiment, the fairing is connected to the first and/or the second blade segment. For example, the fairing is, at its one end in the longitudinal direction, connected to the first blade segment and, at its other end in the longitudinal direction, connected to the second blade segment. Connection can be made by mechanical means, such as screws, bolts etc. and/or by chemical means using an adhesive etc.

In one embodiment, the fairing is fixedly connected to the first blade segment. At the second blade segment, no fixed connection is made, thus allowing for deformations to occur in operation of the blade when installed on a wind turbine, for example to account for heat or age-related effects.

The fairing, in particular at the point of connection with the first and/or second blade segment may form a continuous surface with the outer surface of the first and/or second blade segment. To this end, putty and paint may be used to fill up any gaps, steps etc. between the fairing and the first and/or second blade segment, in particular an outer surface of a respective shell of the first and/or second blade segment. Thus, the connection between the fairing and the first and/or second blade segment is, preferably, not distinguishable to the naked eye.

According to a preferred embodiment, the first and/or second blade segment comprises a shoulder on its outside receiving the fairing at one end thereof.

The shoulder or step is, preferably, formed inside an outer surface of a shell of the first and/or second blade segment. The height of the shoulder is, preferably, the same as the thickness of the fairing plus adhesive or a gasket. This results in a smooth outer surface at the point of connection between the fairing and the first and/or second blade segment.

The first and second blade segment may each comprise a shoulder as herein described. Thus, the shoulder on the first blade segment receives the fairing at its one end, and a shoulder on the second blade segment receives the fairing at its other end.

According to a further embodiment, the first and/or second blade segment is connected to the fairing, preferably at the one end thereof, using a flexible and/or sealing element.

Using a flexible element, such as a rubber gasket, relative motion, for example as a result of changes in temperature or aging, can be accounted for. When a sealing element is provided, ingress of sand, water, moisture, or other substances is prevented towards the connecting elements. The flexible and sealing element may also be integrated into a single element, such as a rubber gasket. In this way, the number of parts is advantageously reduced.

According to a further embodiment, the fairing, in particular its airfoil-shaped cross-section, and/or the hatch is made, partially or fully, of a composite, plastics material and/or metal.

As a composite material, a fiber-reinforced plastics material may be used. As fibers, carbon fibers, glass fibers, aramid fibers or other fibers may be used. As a matrix, in which the fibers are embedded, a resin, for example including an epoxy resin, may be used. The fairing and/or the hatch may thus comprise multiple layers of laminate. As a plastics material, a polymer may be used. As a metal, aluminum, steel etc. may be used.

According to a further embodiment, the connecting elements comprise threaded means and the opening is configured to allow access for tightening or untightening the threaded means and/or wherein electronic components connected to or integrated with the first and/or second blade segment or the connecting elements are accessible through the opening.

For example, the opening may be large enough for an operator to move one hand, both hands and/or a tool for tightening or untightening the threaded means through said opening. The threaded means may, for example, comprise a bolt, a nut, a bolt head, a threaded bushing, a threaded rod etc. The tool mentioned herein may be a spanner, screwdriver, or the like.

Examples of electronic components are elements of a lightening protections system, sensors and/or electric cables.

According to a further embodiment, the blade comprising a leading-edge protection partially covering the fairing.

In particular, the fairing has a leading edge which is covered by the leading-edge protection. Again, putty and paint may be used to create a smooth surface between the leading-edge protection and the fairing.

According to a further aspect, a wind turbine comprise the blade as described above is provided.

In another aspect, a method for manufacturing a blade, in particular a blade as described above, is provided. The blade comprises a first and a second blade segment connected to each other. The method comprises:
a) providing a fairing having an airfoil-shaped cross-section and an opening; and
b) connecting the first and second segment using connecting elements by accessing the connecting elements through the opening.

According to a further embodiment, the fairing is connected to the first and/or second blade segment followed by step b).

Preferably, the fairing is connected to the first blade segment. Then the first and second blade segments are connected in accordance with step b). In a further step, the fairing is connected to the second blade segment, in particular in a flexible manner.

According to an embodiment, the fairing is sealed against the first and/or second blade segment. For example, in a case where the fairing is connected to the first blade segment using an adhesive, the adhesive may provide also the sealing function. The same applies to the second blade segment in cases where the second blade segment is adhesively connected to the fairing. In other cases, there may just be a sealing element, such as a rubber gasket being introduced in a gap (still present after step b)) between the fairing and the second blade segment.

In a further embodiment, the method comprises closing the opening with a hatch after step b).

For example, the hatch is fastened to one or more components of the blade, for example to the connecting elements, to the fairing or a frame thereof. To this end, an adhesive, screws, bolts, or other means (mechanical and/or chemical means) may be used.

According to a further aspect, a method for maintaining a blade as described above is provided. The method comprises removing the hatch, in particular in a destructive or nondestructive manner, to give access through the opening to the connecting elements.

Embodiments and features described with respect to the first aspect equally apply to the other aspects described herein, and vice versa.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
Fig. 1 shows, in a perspective view, a wind turbine according to an embodiment;
Fig. 2 shows, in a perspective view, a portion of a blade illustrated in Fig. 1.
Fig. 3 shows, in a perspective view, a frame with an associated hatch, wherein the hatch is removed from the frame;
Fig. 4 shows a section IV-IV from Fig. 2;
Fig. 5 shows a section V-V from Fig. 2;
Fig. 6 shows a method according to an embodiment; and
Fig. 7 shows a method according to a further embodiment.

In the Figures, like reference numerals designate like or functionally equivalent elements, unless otherwise indicated.

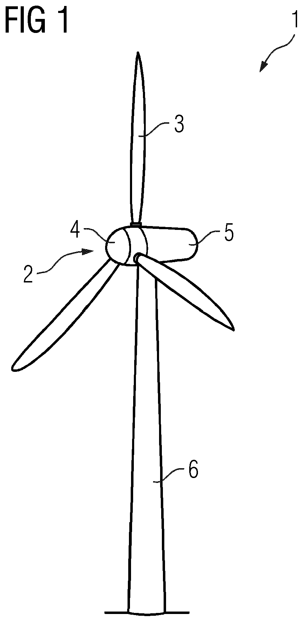

Fig. 1 shows a wind turbine 1 according to an embodiment. The wind turbine 1 comprises a rotor 2 having two or more blades 3 connected to a hub 4. The hub 4 is connected to a generator (not shown) arranged inside a nacelle 5. During operation of the wind turbine 1, the blades 3 are driven by wind to rotate and the wind's kinetic energy is converted into electrical energy by the generator in the nacelle 5. The nacelle 5 is arranged in the upper end of a tower 6 of the wind turbine 1. The tower may be connected to a monopile or concrete foundation in the ground or sea bed.

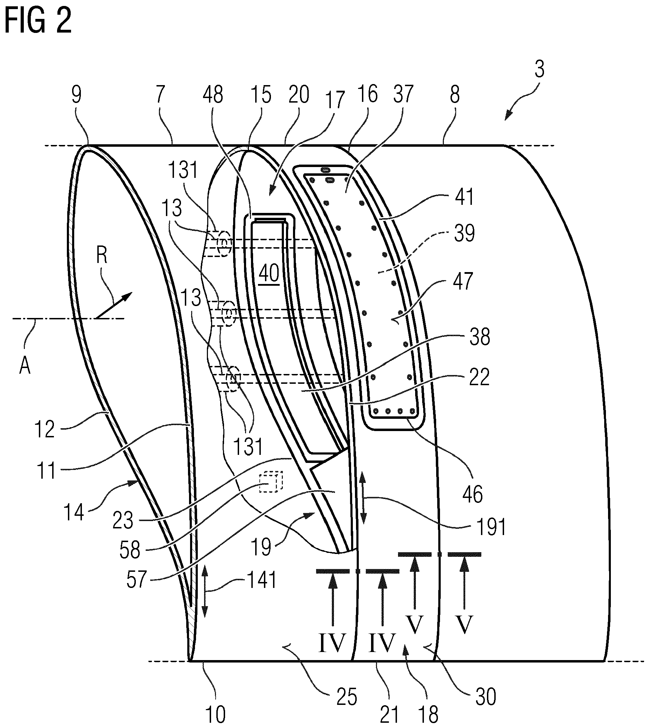

Fig. 2 shows, in a perspective view, a portion of a blade 3 illustrated in Fig. 1. The blade 3 comprises a first blade segment 7 and a second blade segment 8. Fig. 2 shows only a portion of the respective blade segments 7, 8. For example, the first blade segment 7 is an inboard blade segment and may comprise a root (not shown) of the blade 3. Further, the second blade segment 8 may be an outboard blade segment and may comprise the tip (not shown) of the blade 3.

The blade segments 7, 8 are connected to each other along the longitudinal axis A of the blade. The longitudinal axis A is, for example, also a pitch axis of the blade 3. Additionally, or alternatively, the longitudinal axis A passes through a geometric center of an airfoil-shaped cross-section 14 of the first blade segment 7 and/or an airfoil-shaped cross-section (not shown) of the second blade segment 8. The airfoil-shaped cross-section 14 has a leading edge 9, a trailing edge 10, a suction side 11 and a pressure side 12. The suction side 11 and the pressure side 12 respectively connect the leading edge 9 with the trailing edge 10 along opposite sides of the blade 3. The second blade segment 8 has a corresponding cross-section which is, as mentioned, not shown in Fig. 2.

Each blade segment 7, 8 may be made of a fiber-reinforced material (laminate). Different processes of making such blade segments 7, 8 are known in the art. For example, a fiber layup may be placed on a mandrel inside a mold. Then, the fiber layup is infused with resin and cured. In another approach, two half-shells made of fiber composite material are first manufactured in a respective mold. To this end, a fiber material is placed in the respective mold and infused with a resin and cured. The hardened half-shells are, in a further step, connected to form the closed profile seen in Fig. 2.

The blade segment 7, 8 in Fig. 2 are first manufactured separately (typically including curing) and then connected using connecting elements 13. Three said connecting elements 13 are shown in the broken-out section of Fig. 2. The connecting elements 13, for example threaded rods, extend parallel to the longitudinal axis A. The threaded rods 13 comprise a threaded portion at either end. Said threaded portions are screwed into respective threaded bushings 131 integrated, in particular glued, into the blade segments 7, 8. The material of the blade segment 7 in which the bushings 131 are integrated (glued) is not shown. Bushings on the opposite side, i.e., inside the blade segment 8, are not illustrated. Instead of the connecting elements 13, 131 any other suitable connecting elements may be used.

The blade segment 7 has an end 15 facing towards the blade segment 8. The blade segment 8 has an end 16 facing towards the blade segment 7. An air gap 17 between the ends 15, 16 through which the threaded rods 13 (or any other connecting element) extend is covered by a fairing 18.

The fairing 18 has an airfoil-shaped cross-section 19 and may be reinforced by a web 57. The cross-section 19 is made up of, for example, a leading edge 20, a trailing edge 21, a suction side 22 and a pressure side 23. The suction side 22 and the pressure side 23 respectively connect the leading edge 20 with the trailing edge 21 on opposite sides of the blade 3.

The fairing 18 or cross-section 19 is preferably formed as a single integral component/piece. This means that the portions of the cross-section 19 making up the leading edge 20, the trailing edge 21, the suction side 22 and the pressure side 23 are made as one continuous piece of material. For example, the fairing 18, in particular its cross-section 19, is cast in a mold (not shown). In particular, a fiber layup defining the complete cross-section 19 is placed in a mold, possibly on top of mandrel (not shown), and infused with resin and cured. In another embodiment, the fairing 18, in particular the cross-section 19, is injection-molded. In the latter case, the fairing 18, and in particular the cross-section 19, is made of a polymer.

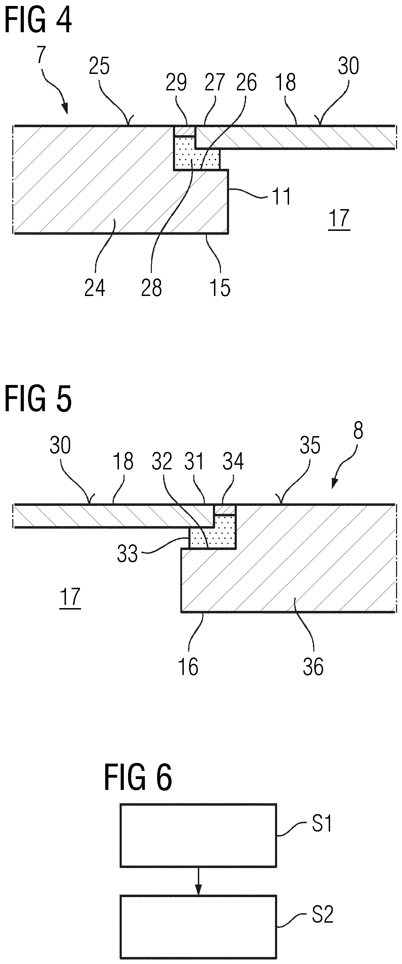

The airfoil-shaped cross-section 19 has a closed shape along its perimeter 191. Preferably, the perimeter 191 does not radially extend further than a perimeter 141 of the cross-section 14 at the position of the end 15. Put differently, the cross-section 19 of the fairing 18 may be configured to not extend radially further than the cross-section 14 of the blade segment 7 at the end 15. This feature may be obtained as illustrated in Figs. 4 and 5. Fig. 4 shows a section IV-IV from Fig. 2, and Fig. 5 shows a section V-V from Fig. 2.

In Fig. 4, there is illustrated a shell 24 of the blade segment 7 comprising the end 15 as well as an outer surface 25 of the blade segment 7. The shell 24 has a shoulder 26 formed therein. An end 27 of the fairing 18 facing towards the blade segment 7 is received in the shoulder 26. The end 27 is bonded to the shoulder 26 using an adhesive 28, thus forming, preferably, a rigid connection. Any remaining gap is filled with putty 29 and then painted (not shown) to provide a smooth transition between the outer surface 25 of the blade segment 7 and an outer surface 30 of the fairing 18.

Fig. 5 shows that the opposite end 31 of the fairing 18 facing towards the blade segment 8 is received in a shoulder 32 of a shell 36 of the blade segment 8. A flexible sealing gasket 33, for example made of rubber, seals the end 31 of the fairing 18 against the shoulder 32 of the blade segment 8. Any remaining gaps are filled with putty 34 to provide a smooth surface transition between an outer surface 35 of the shell 36 and the outer surface 30 of the fairing 18. The gasket 33 allows movement of the first and second blade segment 7, 8 relative to each other and/or allows the fairing 18 to move relative to the second blade segment 8. Thereby, temperature and aging effects can be accounted for, for example.

Returning to Fig. 2, it is shown that two hatches 37, 38 are provided. The hatches 37, 38 are each shown in a state where they close a corresponding opening 39, 40 in the fairing 18. The opening 39 is formed in the suction side 22 of the fairing 18, and the opening 40 is formed in the pressure side 23 of the fairing 18.

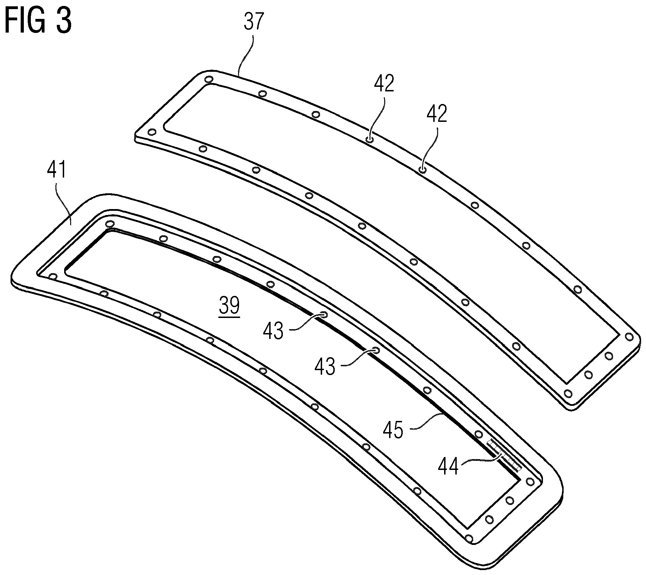

Fig. 3 illustrates the hatch 37 in a state where it is removed from the opening 39. The opening 39 is defined by a frame 41. The frame 41 functions as a reinforcement, reinforcing the fairing 18 to provide sufficient stability around the opening 39.

In the example, the hatch 37 and the frame 41 both have a rectangular shape and are each curved to define the suction side 22 of the fairing 18. The hatch 37 may be made of a fiber-reinforced material (laminate) or a polymer, preferably cast in a mold, for example by a resin infusion process or by injection molding. The frame 41 may be made from a fiber-reinforced material, metal, or polymer.

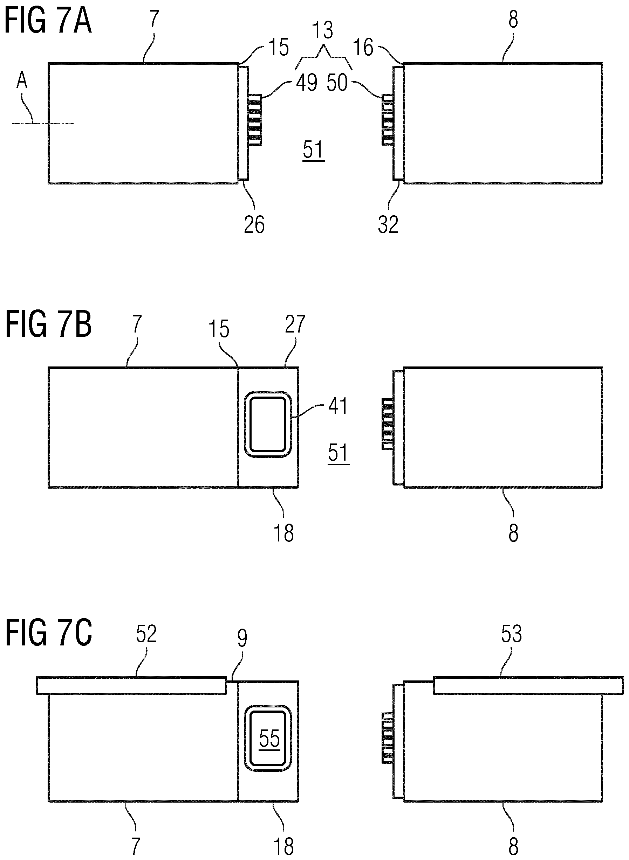

The frame 41 is bonded, using adhesive, into a corresponding opening 55 (shown in Fig. 7c)) in the fairing 18. However, the frame 41 could also be connected to the fairing 18 by screws, rivets, or other means, or could be integrally formed with the fairing 18. According to the example, the hatch 37 comprises multiple hole 42 and is screwed (screws not shown) to the frame 41 in its closed state using threaded holes 43 formed inside the frame 41.

In addition, or alternative to the screws or other means for connection, the hatch 37 may seal against the frame 41 or directly against the fairing 18 in other embodiments. To this end, a sealing member 44 is provided between the hatch 37 and the frame 41 or fairing 18. For example, a rubber seal 44 (only a portion of which is shown in Fig. 3) extends along an inner circumference 45 of the frame 41. The hatch 37 in its closed position seals against the rubber seal 44. Rather than using the seal 44, the hatch 37 may be bonded, using a sealing adhesive, to the frame 41 or directly to the fairing 18.

Returning to Fig. 2, a gap is indicated at reference numeral 46 formed between the hatch 37 and the frame 41. Said gap 46 may be filled with a putty and covered with paint to provide for a smooth surface transition between the outer surface 30 of the fairing 18 and an outer surface 47 of the hatch 37. What has been explained in regard to the hatch 37 equally applies to the hatch 38 and a corresponding frame 48. The hatch 38 and the frame 48 are seen through the broken-out portion from inside in Fig. 2.

When the hatches 37, 38 are removed, the corresponding openings 39, 40 give access for an operator to reach the connecting elements 13 for tightening or untightening the same during assembly or maintenance. For example, the openings 39, 40 can be sized so as to allow access with two hands and/or a tool, such as a spanner or screwdriver to reach the connecting elements 13.

Also, one or more electronic components 58 (Fig. 2) may be arranged in the blade 3, for example in the first blade segment 7 as shown in Fig. 2. These electronic components 58, such as elements of a lightening protections system, sensors, electric cables, may be accessed through the openings 39, 40 for assembly, maintenance and regular checks.

Fig. 6 illustrates a method for manufacturing a blade 3 according to an embodiment.

In step S1, a fairing 18 is provided. The fairing 18 has an airfoil-shaped cross-section 19 and an opening 39.

In step S2, first and second blade segments 7, 8 are connected using connecting elements 13 by accessing the connecting elements 13 through the opening 39.

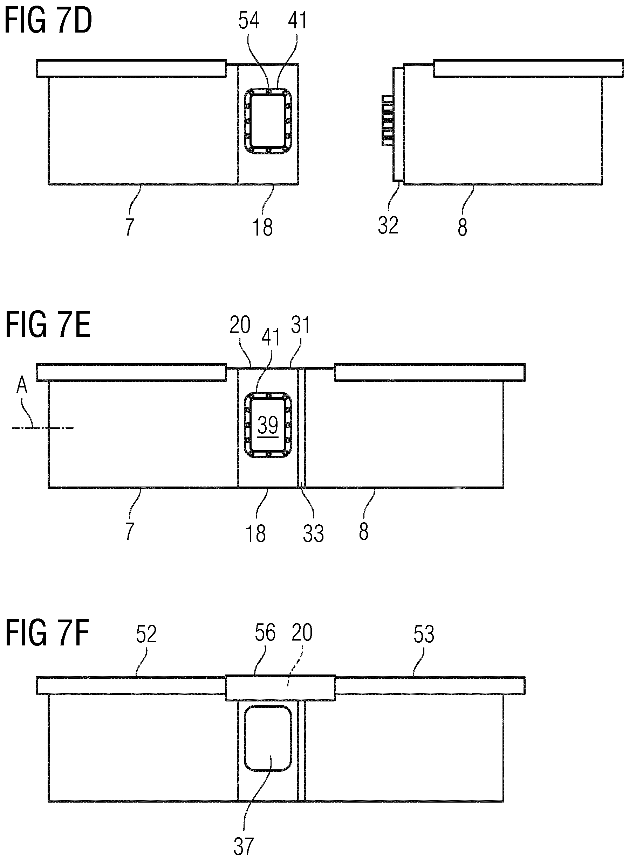

Fig. 7 illustrates a further embodiment of a method for manufacturing a blade 3 which provides more optional details compared to Fig. 6.

In a step illustrated in Fig. 7a), blade segments 7, 8 are arranged along a longitudinal axis A. Opposite ends 15, 16 face each other. Corresponding connection means 48, 50 of connecting elements 13 are aligned.

In a step illustrated in Fig. 7b), a fairing 18 is attached to the end 15 of the blade segment 7 by moving the fairing 18 into the interspace 51 between the segments 7, 8 and moving the fairing 18, along the longitudinal axis A, such that its one end 27 covers the shoulder 26 (see Fig. 7a)) at the end 15 of blade segment 7.

In a step illustrated in Fig. 7c), a leading-edge protection system 52, 53 is applied to the leading edge 9 of the blade segments 7, 8, respectively.

In a step illustrated in Fig. 7d), a frame 41 is mounted, for example by ways of screw 54 to the fairing 18. Therein, the frame 41 is mounted inside an opening 55 (see Fig. 7c)) of the fairing 18.

In a step illustrated in Fig. 7e), the blade segments 7, 8 are brought together by moving each of the blade segments 7, 8 or only one of them along the longitudinal axis A until an end 31 of the fairing 18 is received in a shoulder 32 (Fig. 7d)) of the blade segment 8. An operator (not shown) reaches through the opening 39 to connect the connection means 49, 50 to thus establish a sturdy connection between the blade segments 7, 8. Optionally, a seal 33 is provided to seal the end 31 against the shoulder 32 to prevent ingress of contaminants.

In a step illustrated in Fig. 7f), a leading-edge protection 56 is attached to the leading edge 20 (see Fig. 7e)) of the fairing 18. The leading-edge protection 56 may be connected, in particular bonded using adhesive, to the leading-edge protections 52 and 53. For example, the leading-edge protections 52, 53 and 56 are made of a fiber-reinforced tape. Also now, the hatch 37 is connected to the frame 41 so as to close the opening 39. In a final step, putty can be used to fill all gaps, and paint may be used as a final finish of all surfaces shown.

Although the present invention has been described in accordance with preferred embodiments, it is obvious for the person skilled in the art that modifications are possible in all embodiments.

## Claims

1. A blade (3) for a wind turbine (1), comprising:
a first and a second blade segment (7, 8) connected to each other using connecting elements (13); and
a fairing (18) having an airfoil-shaped cross-section (19) and an opening (39, 40) for accessing the connecting elements (13).

2. The blade according to claim 1, wherein the opening (39, 40) is arranged on the suction or pressure side (22, 23) of the airfoil-shaped cross-section (19).

3. The blade according to one of claims 1 - 2, wherein the airfoil-shaped cross-section (19) has a closed shape along its perimeter (191).

4. The blade according one of claims 1 - 3, wherein the fairing (18) or airfoil cross-section (19) is formed as a single integral component.

5. The blade according to one of claims 1 - 4, further comprising a hatch (37, 38), wherein the opening (39, 40) is closed by the hatch (37, 38), the hatch (37, 38) being preferably fastened to the fairing (18) or a frame (41), wherein, preferably, a sealing element (44) is arranged between the hatch (37, 38) and the fairing (18) or frame (41).

6. The blade according to one of claims 1 - 5, wherein the fairing (18) is connected to the first and/or second blade segment (7, 8).

7. The blade according to one of claims 1 - 6, wherein the first and/or second blade segment (7, 8) comprises a shoulder (26, 32) on its outside receiving the fairing (18) at one end (27, 31) thereof.

8. The blade according to one of claims 1 - 7, wherein the first and/or second blade segment (7, 8) is connected to the fairing (18), preferably at the one end (31) thereof, using a flexible and/or sealing element (33).

9. The blade according to one of claims 1 - 8, wherein the fairing (18), in particular its airfoil-shaped cross-section (19), and/or the hatch (37, 38) is made, partially or fully, of a composite, plastics material and/or metal.

10. The blade according to one of claims 1 - 9, wherein the connecting elements (13) comprise threaded means and the opening (39, 40) is configured to allow access for tightening or untightening the threaded means and/or wherein electronic components (58) connected to or integrated with the first and/or second blade segment (7, 8) or the connecting elements (13) are accessible through the opening (39, 40).

11. The blade according to one of claims 1 - 10, further comprises a leading-edge protection (56) partially covering the fairing (18).

12. A wind turbine (1) comprising a blade (3) according to one of claims 1 - 11.

13. A method for manufacturing a blade (3) comprising a first and a second blade segment (7, 8) connected to each other, the method comprising:
a) providing (S1) a fairing (18) having an airfoil-shaped cross-section (19) and an opening (39, 40); and
b) connecting (S2) the first and second blade segment (7, 8) using connecting elements (13) by accessing the connecting elements (13) through the opening (39, 40).

14. The method of claim 13, further comprising connecting the fairing (18) to the first and/or second blade segment (7, 8) followed by step b).

15. The method of claim 13 or 14, further comprising closing the opening (39, 40) with a hatch (37, 38) after step b).
